# EUROPÄISCHE PATENTSCHRIFT

(11) **EP 2 493 316 B1**
(45) Veröffentlichungstag und Bekanntmachung des Hinweises auf die Patenterteilung: **04.03.2015**
(21) Anmeldenummer: 10765437.8
(22) Anmeldetag: 13.10.2010
(51) Int. Cl.: A01N 63/00, A01P 3/00

(54) **BEHANDLUNG VON PFLANZEN UND SAATGUT GEGEN EINEN/BEI EINEM BEFALL MIT PERONOSPOROMYCETEN**
TREATMENT OF PLANTS AND SEED FOR COMBATING AN ATTACK/DURING AN ATTACK OF PERONOSPOROMYCETES
TRAITEMENT DE PLANTES ET DE SEMENCES CONTRE/PENDANT UNE ATTAQUE DE PÉRONOSPOROMYCÈTES

(30) Priorität: 28.10.2009 DE 102009051851
(43) Veröffentlichungstag der Anmeldung: 05.09.2012
(73) Patentinhaber: Sourcon-Padena GmbH & Co. KG, 72072 Tuebingen (DE)
(72) Erfinder: VOGT, Wolfgang, 72072 Tuebingen (DE)
(74) Vertreter: Witte, Weller & Partner Patentanwälte mbB
(86) Internationale Anmeldenummer: PCT/EP2010/065348
(87) Internationale Veröffentlichungsnummer: WO 2011/051104

(56) Entgegenhaltungen:
- WO-A2-01/40441
- Sourcon Padena GmbH & Co. KG: "PRORADIX-SEED TREATMENT FOR POTATOES", INTERNET CITATION, September 2000 (2000-09), XP002168107, Gefunden im Internet: URL:http://www.sourcon-padena.de/home_e/ag rar/kartoffel.htm [gefunden am 2001-05-23]
- Anonymous: "Die neue Formel für Saatgut - Proradix Turf", stadionwelt.de , 22. Januar 2008 (2008-01-22), XP002667186, Gefunden im Internet: URL:http://www.stadionwelt-business.de/ind ex.php?head=Die-neue-Formel-fuer-Saatgut-P roradix-Turf&rubrik=ausstattung&site=news_ view&news_id=1455&kat=&ukat=pflege_duengun g [gefunden am 2012-01-16]
- M Zeilner ET AL: "Gezielte Bekämpfung von Kartoffelkrankheiten", Gezielte Bekämpfung von Kartoffelkrankheiten, 1. Januar 2004 (2004-01-01), XP055016633, Gefunden im Internet: URL:http://www.abitep.de/content/pdf/Bekae mpfung-kartoffel-krankheiten_BLAF_2004.pdf [gefunden am 2012-01-16]

## Beschreibung

Die vorliegende Erfindung betrifft die Behandlung von Pflanzen und/oder Saatgut gegen einen/bei einem Befall mit einem Erreger der Klasse Peronosporomycetes, nämlich *Phytophthora sp.*

Peronosporomycetes, die früher als Oomycota oder Oomycetes bezeichnet wurden, gehören zu den Erregern einiger gefürchteter Pflanzenkrankheiten. *Phytophtora infestans,* eine der wichtigsten Arten, kann bspw. bei der Tomate die Kraut- und Braunfäule und bei der Kartoffel die Kraut- und Knollenfäule auslösen. Bei Kartoffeln führt der Befall zu beachtlichen Ertragsausfällen, die besonders in feuchten Sommern, zum Teil auch im Frühling, in denen der Erreger optimale Bedingungen für die Vermehrung vorfindet, regelmäßig 20 % des durchschnittlichen Ertrages übersteigen können. Bei Freilandtomaten kann die Krankheit bis zum Totalausfall der Ernte führen.

Erste Symptome dieser Krankheiten werden an Blättern und Stängeln sichtbar: von den Blatträndern her treten dunkelbraune Flecken auf. Sie vergrößern sich rasch bei feuchtem Wetter oder starker Taubildung und bilden auf der Unterseite der Blätter einen weißen pilzartigen Rasen, der an Schimmel erinnert. An den Enden der pilzartigen Fäden entstehen Sporenbehälter, sog. Sporangien. Die Sporen werden bei Nässe freigesetzt und dringen mit Hilfe eines Keimschlauches aktiv in das pflanzliche Gewebe ein. Bei Temperaturen über 10 °C keimen die Sporangien auch direkt aus.

Gerade im ökologischen aber auch im konventionellen Kartoffelanbau stellt der Primärbefall, der sog. Stängelbefall, ein großes Problem dar, da dieser schnell zum vorzeitigen Ausbruch von Sekundärbefall führen kann. Der Krankheitserreger gelangt über Wunden, natürliche interzelluläre Öffnungen, sog. Lentizellen, und Keimanlagen schon während der Vegetationszeit oder bei der Ernte in die Knollen. Befallene Knollen weisen graublau verfärbte Flecken und braunes Knollenfleisch, ohne scharfe Abgrenzung zum gesunden Gewebe, auf. Sie sind ungenießbar. Der Krankheitserreger überwintert auch in den Knollen. Schon eine infizierte, faule Knolle kann ausreichen, um eine Epidemie in einem Kartoffelbestand auszulösen.

Umfangreiche Forschungsarbeiten, die an der Bayerischen Landesanstalt für Landwirtschaft in den letzten Jahren durchgeführt wurden, zeigen, dass bei hoher Bodenfeuchtigkeit eine Infektion über den Boden stattfindet. Unter diesen Bedingungen bilden sich auf der erkrankten Pflanzenknolle Sporen, die mit dem Bodenwasser verteilt werden. Auf diese Art und Weise können Nachbarpflanzen oder Stängel der eigenen Pflanze schon im Boden infiziert werden, die dann ebenfalls krank aufwachsen. Dadurch entstehen die typischen *Phytophtora*-Befallsnester. Die Pflanzen zeigen schon sehr früh Stängelbefall.

Andere Autoren kommen auch zur Schlussfolgerung, dass *Phytophthora infestans* nach ergiebigen Niederschlägen und hoher Bodenfeuchtigkeit entweder von der infizierten Pflanzenknolle im Stängel nach oben wachsen oder aber auf der Oberfläche der Mutterknolle sporulieren; vgl. Radtke et al. (2000), Adler (2001), Zellner (2004).

Die Bekämpfung der Kraut- und Knollen-/Braunfäule ist bislang nicht auf zufriedenstellende Art und Weise gelöst. Dies liegt vor allem daran, dass bspw. *Phytophthora sp.* Resistenzen gegenüber Wirkstoffen der Gruppen Phenylamide und Carbamate sowie dem Wirkstoff Dimethomorph zeigen.

Zum Schutz gegen einen Befall durch *Phytophthora sp.* werden Kartoffelpflanzen bzw. das Saatgut, d.h. die Pflanzkartoffeln deshalb häufig mit Kupferlösungen behandelt. Allerdings hat sich ergeben, dass mit Kupferspritzungen der Primär- bzw. Stängelbefall gerade im ökologischen aber auch im konventionellen Kartoffelanbau nur schlecht kontrollierbar ist. Außerdem führt der Einsatz von Kupfer zu starken Umweltbelastungen, so dass die Europäische Gemeinschaft Bestrebungen hat, den Kupfereinsatz zu minimieren.

*Pythium sp.* ist eine weitere wichtige zu den Peronosporomycetes zählende Art, die bei verschiedensten Keimlingen zur sogenannten Umfallkrankheit, im Englischen als "damping off" bezeichnet, führen kann. Auch die Behandlung dieser Pflanzenkrankheit ist bislang nicht zufriedenstellend gelöst.

Vor diesem Hintergrund liegt der Erfindung die Aufgabe zugrunde, eine Alternative zu den derzeit verwendeten Mitteln zur Behandlung von Pflanzen- und/oder Saatgut gegen einen/bei einem Befall mit einem Erreger der Klasse Peronosporomycetes, nämlich *Phytophthora sp.,* bereitzustellen, mit dem vorzugsweise die Verwendung von Kupfer vermieden oder zumindest reduziert werden kann.

Diese Aufgabe wird durch die Verwendung des Bakteriums *Pseudomonas sp.* Proradix (DSMZ 13134) gelöst.

Bei dem Pseudomonas-Stamm Proradix, der am 3. November 1999 unter der Hinterlegungsnummer DSM 13134 bei der DSMZ, 38124 Braunschweig, Deutschland, nach dem Budapester Vertrag hinterlegt wurde, handelt es sich um eine neue Spezies innerhalb der RNA-Gruppe I der Pseudomonadaceae. Eine endgültige Zuordnung von Proradix ist bislang noch nicht erfolgt, da nur eine relativ geringe Sequenzähnlichkeit zu bislang beschriebenen Arten der Gattung *Pseudomonas* besteht.

Die Wirksamkeit des Pseudomonas-Stammes Proradix gegen einen Befall von Pflanzen und/oder Saatgut mit einem Erreger der Klasse Peronosporomycetes, wie . *Phytophthora sp.* war überraschend und so nicht zu erwarten.

Der hinterlegte Pseudomonas-Stamm Proradix wird ausführlich in der WO 01/40441 beschrieben, auf die hiermit Bezug genommen wird. Dort wird eine Wirkung von Proradix gegen die Schwarzfäule beim Salat und Braunfäule bei Kartoffelknollen beschrieben. Beide Pflanzenkrankheiten werden durch *Rhizoctonia solani* ausgelöst.

*Rhizoctonia solani* zählt zu den echten Pilzen, gehört also dem Reich der Pilze (Fungi) an. *Rhizoctonia* ist die asexuelle Form von *Thanatephorus cucumeris* und ist eine weltweit verbreitete Pilzart aus der Gruppe der Basidienpilze. Zu den Basidienpilzen gehören auch so bekannte Speisepilze wie der Steinpilz und der Champignon.

In der Literatur wird außerdem behauptet, dass der Pseudomonas-Stamm Proradix gegen einen Befall von Pflanzen bzw. Saatgut durch die Gattung *Fusarium sp.* verwendet werden kann. Bei *Fusarium* handelt es sich ebenfalls um ein zum Reich der echten Pilze gehörendes Lebewesen, das eine Vielzahl von Pflanzenkrankheiten auslösen kann, die als Fusariosen bezeichnet werden.

Basierend auf den in der WO 01/40441 beschriebenen Experimenten und dem übrigen Stand der Technik könnte ein Fachmann demnach ggf. annehmen, dass der Pseudomonas-Stamm Proradix zur Behandlung von Pflanzen oder Saatgut gegen einen Befall auch durch weitere Pilze eingesetzt werden könnte.

Völlig überraschend war jedoch die positive Wirkung von Proradix auf Pflanzen bzw. Saatgut bei einem bzw. gegen einen Befall durch Phytophthora. sp. Diese gehören nämlich nicht zu den echten Pilze (Fungi) sondern zu den Chromalveolata.

Die Chromalveolata sind gänzlich anders organisiert als die echten Pilze. Die Chromalveolata besitzen im Gegensatz zu Pilzen Plastiden, die aus einer sekundären Endosymbiose mit einem Vertreter der Achaeplastida stammen. Das heißt, sie haben in ihrer evolutiven Entwicklung einen Einzeller mit Plastiden aus Endosymbionten aufgenommen und den primären Wirt soweit reduziert, dass nur mehr der Plastid übrig blieb.

Die Peronosporomycetes sind somit viel näher mit Braunalgen, Goldalgen und Kieselalgen verwandt als mit den echten Pilzen; vgl. Adl et al. (2005). Die Peronosporomycetes leben im Wasser, in Wassertieren, im Boden oder in Landpflanzen als Saprophyten oder Parasiten.

Vor diesem Hintergrund wäre anzunehmen gewesen, dass ein gegen Pilze wirksames Mittel bei einem Befall von Pflanzen oder Saatgut durch Peronosporomycetes wirkungslos sei.

Besonders überraschend ist die gute Wirkung von Proradix gegen einen Befall von Pflanzen oder Saatgut mit einem Erreger der Klasse Peronosporomycetes auch deshalb, da den Erfindern bislang unveröffentlichte Ergebnisse einer wissenschaftlichen Untersuchung vorliegen, die vermeintlich belegen, dass Proradix gegen *Pythium aphanidermatum,* einen Vertreter der Peronosporomycetes, keinerlei positive Wirkung haben soll; Hamelink und Paternotte (2008), "Efficacy of Proradix against *Pythium aphanidermatum* in cucumber". Die Erfinder hingegen konnten die positive Wirkung von Proradix gegen eben diesen Erreger vielfach reproduzieren und vermuten, dass entgegen gesetzte Ergebnisse auf einen methodischen Fehler der Experimentatoren zurückgehen könnten.

Die Erfindung wird mit der Bereitstellung des Pseudomonas-Stammes Proradix vollkommen gelöst.

Mit dem Pseudomonas-Stamm Proradix wird erstmals ein Wirkstoff bereitgestellt, der eine echte Alternative zu Kupfer darstellt. So konnten die Erfinder in Experimenten an Kartoffelknollen und Saatgut von Gurken eindrucksvoll demonstrieren, dass der Stängelbefall bei mit dem Pseudomonas-Stamm Proradix als alleinigem Wirkstoff (Monotherapie) behandelten Pflanzen im Vergleich zu unbehandelten Pflanzen deutlich reduziert werden konnte. Mittels Proradix lässt sich folglich wirksam die Kraut- und Knollen-/Braunfäule sowie "Umfallkrankheit" behandeln bzw. dieser vorbeugen. Diese positiven Wirkungen von Proradix sind mit jenen vergleichbar, die durch Kupfer erzielt werden können.

Wie die Erfinder feststellen konnten, kann der Pseudomonas-Stamm Proradix einen Befall von noch nicht infizierten Pflanzen bzw. Knollen durch Phytophthora sp. deutlich reduzieren und so den Emteertrag durch das Mitwachsen an der Wurzel schützen.

Besonders vorteilhaft ist somit, dass der Pseudomonas-Stamm Proradix bei unbefallenen Pflanzen/Saatgut prophylaktisch eingesetzt werden kann.

In der Tat ist im Stand der Technik bislang kein anderes Bakterium beschrieben, das bei einem bzw. gegen einen Befall von Pflanzen bzw. Saatgut durch Peronosporomycetes, vergleichbare positive Ergebnisse liefert.

Bei dem Erreger handelt es sich um *Phytophthora sp.*

Diese Maßnahme hat den Vorteil, dass zielgerichtet die wichtigste phytopathogene Art innerhalb der Peronosporomycetes bekämpft wird. Wie die Erfinder demonstrieren konnten, zeigt der Pseudomonas-Stamm Proradix gerade bei dieser Art optimale Wirkung.

Es ist bevorzugt, wenn die erfindungsgemäße Verwendung des Bakteriums *Pseudomonas sp.* Proradix gegen einen Primärbefall bzw. Stängelbefall durch *Phytophthora sp.,* bevorzugt *Phytophthora infestans* erfolgt.

Diese Maßnahme hat den Vorteil, dass ein gerade im ökologischen Kartoffelbau auftretendes großes Problem behandelt wird, welches mit Kupferspritzungen nur schlecht zu kontrollieren ist und schnell zum vorzeitigen Ausbruch von Sekundärbefall führen kann.

Nach einer bevorzugten Variante werden erfindungsgemäß Kartoffelpflanzen (*Solanum tuberosum*) und/oder Knollen hiervon bzw. das Saatgut der Gurke (*Cucumis sativus*) behandelt.

Diese Maßnahme hat den Vorteil, dass zwei der wichtigsten Kulturpflanzen mit großer wirtschaftlicher Bedeutung, die sehr häufig von Peronosporomycetes bzw. *Phytophthora infestans* befallen werden, wirksam geschützt bzw. behandelt werden können. Wie die Erfinder demonstrieren konnten, führt Proradix gerade hier zu besonders guten Ergebnissen.

Der Pseudomonas-Stamm Proradix kann im Rahmen einer Monotherapie als alleiniger Wirkstoff, aber auch in Kombination mit anderen Wirkstoffen eingesetzt werden. Dadurch können sich gegebenenfalls synergistische Effekte ergeben.

Der erfindungsgemäße Pseudomonas-Stamm Proradix kann in beliebiger Formulierung bereitgestellt werden, bspw. als Lösung oder aber als Pulver. Derartige Formulierungen sind dem Fachmann bekannt. Formulierungsbeispiele werden in der WO 01/40441 angegeben, auf die explizit Bezug genommen wird. Geeignet sind außerdem die Formulierungen, die von der Firma Sourcon-Padena GmbH & Co. KG, Tübingen, Deutschland, bereitgestellt werden.

Offenbart wird ferner ein Verfahren zur Herstellung eines Mittels zur Behandlung von Pflanzen und/oder Saatgut gegen einen/bei einem Befall mit einem Erreger der Klasse Peronosporomycetes, mit folgenden Schritten: (a) Bereitstellung des Bakteriums *Pseudomonas sp.* Proradix (DSMZ 13134) in einer pflanzentherapeutisch wirksamen Menge, (b) Formulierung des Bakteriums.

Die Erfindung betrifft außerdem ein Verfahren zur Herstellung eines Mittels zur Behandlung von Pflanzen und/oder Saatgut gegen einen/bei einem Befall mit einem Erreger der Klasse Peronosporomycetes, nämlich *Phytophthora sp.,* mit folgenden Schritten: (a) Bereitstellung von Pflanzen und/oder Saatgut, (b) Inkubation der Pflanzen/des Saatgutes mit einer das Bakterium *Pseudomonas sp.* Proradix (DSMZ 13134) enthaltenden Lösung, wobei die Lösung vorzugsweise durch Beizen, Besprühen oder Tauchbehandlung der Pflanzen/des Saatgutes aufgebracht wird.

Die Merkmale, Vorteile und Eigenschaften der erfindungsgemäßen Verwendung gelten für die erfindungsgemäßen Verfahren gleichermaßen.

Die Erfindung wird nun anhand von Ausführungsbeispielen näher erläutert, aus denen sich weitere Eigenschaften, Merkmale und Vorteile ergeben. Die Ausführungsbeispiele dienen zu Illustrationszwecken und schränken die Reichweite der Erfindung keinesfalls ein.

### Beispiel 1: Wissenschaftliche Klassifizierung der Peronosporomyceten Phytophthora infestans und Pythium ultimum bzw. Pythium aphanidermatum

*Phytophthora infestans* wird wie folgt wissenschaftlich klassifiziert:

| | |
|---|---|
| Klassifikation: | Lebewesen |
| Domäne: | Eucaryota |
| Reich: | Chromalveolata |
| Unterreich: | Stramenopile |
| Klasse: | Peronosporomycetes |
| Ordnung: | Peronosporales |
| Familie: | Peronosporaceae |
| Gattung: | *Phytophthora* |
| Art/Spezies: | *Phytophthora infestans* |

*Pythium ultimum* und *Pythium aphanidermatum* werden wie folgt wissenschaftlich klassifiziert:

| | |
|---|---|
| Klassifikation: | Lebewesen |
| Domäne: | Eucaryota |
| Reich: | Chromalveolata |
| Klasse: | Peronosporomycetes |
| Ordnung: | Pythiales |
| Familie: | Pythiaceae |
| Gattung: | *Pythium* |
| Art/Spezies: | *Pythium ultimum* bzw. *Pythium aphanidermatum* |

*Phytophthora infestans, Pythium ultimum* und *Pythium aphanidermatum* gehören also zum Reich der Chromalveolata, nicht aber zum Reich der echten Pilze (Fungi).

Der Basidiomycet *Rhizoctonia solani,* der im Stand der Technik als mit Proradix behandelbar beschrieben ist, wird hingegen wissenschaftlich wie folgt klassifiziert:

| | |
|---|---|
| Klassifikation: | Lebewesen |
| Domäne: | Eucaryota |
| Reich: | Echte Pilze (Fungi) |
| Stamm: | Basidiomycota |
| Klasse: | Basidiomycetes |
| Ordnung: | Polysporales |
| Familie: | Corticiaceae |
| Gattung: | *Rhizoctonia* |
| Art/Spezies: | *Rhizoctonia solani* |

*Rhizoctonia solani* gehört also zum Reich der echten Pilze und zur Klasse der Basidiomyceten, zu der auch Speisepilze wie der Champignon oder Steinpilz zählen.

Im Stand der Technik ist ferner eine Wirkung von Proradix gegen *Fusarium* beschrieben. *Fusarium* wird wie folgt wissenschaftlich klassifiziert:

| | |
|---|---|
| Klassifikation: | Lebewesen |
| Domäne: | Eucaryota |
| Reich: | Echte Pilze (Fungi) |
| Stamm: | Ascomycota |
| Klasse: | Sordariomycetes |
| Ordnung: | Hypocreales |
| Familie: | Nectriaceae |
| Gattung: | *Fusarium* |

Auch *Fusarium* zählt somit zu den echten Pilzen.

Die Erfinder konnten also völlig überraschend zeigen, dass ein bislang nur in Bezug auf echte Pilze beschriebener Wirkstoff auch gegen Nicht-Pilze, nämlich gegen Erreger der Klasse Peronosporomycetes eingesetzt werden kann.

### Beispiel 2: Isolation von Proradix.

Die Isolation des Bakteriums Pseudomonas sp. Proradix ist ausführlich in der WO 01/40441, dortiges Beispiel 1, beschrieben. Hierauf wird explizit Bezug genommen und die dortige Offenbarung zur Offenbarung der vorliegenden Anmeldung gemacht.

### Beispiel 3: Behandlung von Kartoffeln mit Proradix.

Kartoffelknollen (*Solanum tuberosum*) der Sorte "Hansa" wurden mittels Dosierspritze künstlich mit *Phytophthora infestans* infiziert. Gesunde Knollen der Sorte Fasan wurden mit einer Proradix-Lösung (Proradix®WG, Sourcon-Padena GmbH & Co. KG, Tübingen, Deutschland) nach Angaben des Herstellers gebeizt. Die Konzentration der wässrigen Flüssigbeize betrug ca. 60 g Proradix-Bakterien pro Hektar bzw. ca. 4 x 10¹² CFU pro ca. 2.500 kg Kartoffelknollen.

Als Referenz wurden parallel hierzu gesunde Knollen der Sorte "Fasan" mit einer wässrigen Kupferlösung (Cuprozin^{®}, Spiess-Urania Chemicals GmbH, Hamburg, Deutschland) Angaben des Herstellers gebeizt. Die Konzentration betrug ca. 460,6 g Kupferhydroxid pro Liter, was ca. 300 g/l reinem Kupfer entspricht. Etwa 0,4 l dieser Lösung wurden pro Hektar bzw. pro ca. 2.500 kg Kartoffelknollen aufgebracht.

Die Pflanzung beider Sorten erfolgte per Hand auf einer Versuchsfläche in Sanitz der Firma AGRO Service Nord GmbH, Wietzendorf, Deutschland. Dazu wurden die Pflanzungsstellen exakt alle 30 cm markiert. Der Unterboden wurde festgestampft, damit das Regenwasser eine Zeit lang zurückgehalten wurde und nicht sofort abläuft, denn nur bei feuchten Bedingungen kommt es zu einer Sporulation von *Phytophthora infestans.* Danach wurden zuerst die gesunden Knollen Sorte Fasan gepflanzt. Anschließend wurden die infizierten Knollen der Sorte Hansa direkt auf die zu untersuchende Knollen der Sorte Fasan gelegt und leicht angehäufelt. Dadurch werden die Voraussetzungen für einen möglichen Befall der gesunden, nichtinfizierten Knollen der Sorte Fasan geschaffen. Die aufgelaufenen Pflanzen der Sorte Hansa wurden beseitigt. Die Bonitur konnte so gezielt nur auf die aufgelaufenen gebeizten Pflanzen der Sorte Fasan erfolgen.

Nach einer ca. zweimonatigen Kultivierung wurde der Befall der Sorte Fasan mit *Phytophthora infestans* in den jeweiligen Parzellen wöchentlich bis zur Ernte nach weiteren ca. 2 Monaten bonitiert.

Dieser Versuch wurde zweimal durchgeführt, einmal im Jahre 2008 und einmal im Jahre 2009. In der nachfolgenden Tabelle I ist das Ergebnis zusammengefasst:

**Tabelle I**

| Behandlung | Stängelbefall Erster Ansatz (Jahr 2008) | Stängelbefall Zweiter Ansatz (Jahr 2009) |
|---|---|---|
| Unbehandelte Knollen | 5 % | 91,8 % |
| Mit Proradix behandelte Knollen | 1,5 % | 30 % |
| Mit Kupfer behandelte Knollen | 0,7 % | 16,3 % |

Diese Ergebnisse zeigen auf beeindruckende Art und Weise, dass eine Behandlung von Kartoffelknollen mit dem Bakterium *Pseudomonas sp.* Proradix zu einer deutlichen Abnahme des Primär- bzw. Stängelbefalls durch den Peronosporomycet *Phytophthora infestans* führt, die vergleichbar ist zu jener, die mit einer Kupferhandlung erzielt wird.

### Beispiel 4: Behandlung von Gurkensaatgut mit Proradix (nicht zur Erfindung gehörend)

5 g Proradix (Proradix^{®}WG, Sourcon-Padena GmbH & Co. KG, Tübingen, Deutschland) wurden in 50 ml Wasser für 30 bis 60 min aufgelöst. In dieser Lösung wurden etwa 60 Samen der Gurke (*Cucumis sativus*) für weitere 30 bis 60 min inkubiert, 24 Std. vorgekeimt und dann in Erde gesät, die mit *Pythium ultimum* verseucht war. In einem Parallelansatz wurde zur Kontrolle die gleiche Menge Samen in Wasser ohne Proradix gleichermaßen behandelt. Die Kultivierung erfolgte über 2 Wochen. Anschließend wurde die Anzahl der aufgelaufenen, nicht von der Umfallkrankheit betroffenen Pflanzen bonitiert. Dieser Versuch wurde im Hinblick auf die Daten von Hamelink und Paternotte (a.a.O.) insgesamt dreimal durchgeführt. Das Ergebnis ist in nachfolgender Tabelle II dargestellt.

**Tabelle II**

| Behandlung | Auflaufrate Erster Ansatz (Jahr 2008) | Auflaufrate Zweiter Ansatz (Jahr 2009) | Auflaufrate Dritter Ansatz (Jahr 2009) |
|---|---|---|---|
| Unbehandelte Samen | 51 % | 66 % | 58 % |
| Mit Proradix behandelte Samen | 73 % | 85 % | 71 % |

Dieses Experiment belegt eindrucksvoll, dass Proradix auch in der Lage ist, Gurkenkeimlinge vor einer durch *Pythium ultimum* verursachten Umfallkrankheit zu schützen.

Die Erfinder haben das gleiche Experiment unter identischen Bedingungen auf einem Feld durchgeführt, dessen Erde mit *Pythium aphanidermatum* durchgeführt und kamen zu vergleichbaren Ergebnissen. Sie konnten die Schlussfolgerungen von Hamelink und Paternotte (a.a.O.) nicht bestätigen. Proradix zeigt nach den Erkenntnissen der Erfinder positive Wirkungen gegen sämtliche Spezies der Gattung *Pythium.*

### Fazit:

Die Erfinder konnten überraschenderweise belegen, dass der Pseudomonas-Stamm Proradix, der bislang nur zur Behandlung von durch Pilze verursachten Pflanzenkrankheiten beschrieben wird, erfolgreich zur Behandlung von Pflanzen und/oder Saatgut eingesetzt werden kann, welche mit einem Erreger der Klasse Peronosporomycetes, also mit einem nicht zu den Pilzen zählenden Erreger befallen sind. Dies konnte beispielhaft an den Gattungen *Phytophthora* und *Pythium* und der Kartoffel und Gurke demonstriert werden. Der Pseudomonas-Stamm Proradix kann als Lösung bereitgestellt werden. Die Lösung kann direkt zur Behandlung der Pflanzen und/oder Saatgut in Form von Besprühen, Beizen oder durch Tauchbehandlung eingesetzt werden. Die Lösung kann außerdem vakuumgetrocknet werden, wobei das erhaltene Pulver vor der Anwendung in Wasser gelöst wird.

## Patentansprüche

1. Verwendung des Bakteriums *Pseudomonas sp.* Proradix (DSMZ 13134) zur Behandlung von Pflanzen und/oder Saatgut gegen einen/bei einem Befall mit *Phytophthora sp.*

2. Verwendung nach Anspruch 1, **dadurch gekennzeichnet, dass** es sich bei dem Erreger um *Phytophthora infestans* handelt.

3. Verwendung nach einem der vorherigen Ansprüche, **dadurch gekennzeichnet, dass** es sich bei den Pflanzen um die Kartoffelpflanze (*Solanum tuberosum*) und/oder Knollen hiervon handelt.

4. Verwendung nach einem der Ansprüche 1 bis 3, **dadurch gekennzeichnet, dass** die Behandlung gegen Kraut- und Knollenfäule erfolgt.

5. Verwendung nach einem der Ansprüche 1 bis 4, **dadurch gekennzeichnet, dass** es sich bei dem Saatgut um Saatgut der Gurke (*Cucumis sativus*) handelt.

6. Verwendung nach einem der Ansprüche 1 bis 5, **dadurch gekennzeichnet, dass** die Behandlung der Pflanzen und/oder des Saatgutes gegen die Umfallkrankheit ("damping off") erfolgt.

7. Verfahren zur Behandlung von Pflanzen und/oder Saatgut gegen einen/bei einem Befall mit *Phytophthora sp.,* mit folgenden Schritten:
a) Bereitstellung von Pflanzen und/oder Saatgut,
b) Inkubation der Pflanzen/des Saatgutes mit einer das Bakterium *Pseudomonas sp.* Proradix (DSMZ 13134) enthaltenden Lösung.

8. Verfahren nach Anspruch 7, **dadurch gekennzeichnet, dass** in Schritt (b) die Lösung durch Beizen, Besprühen oder Tauchbehandlung der Pflanzen/des Saatgutes aufgebracht wird.

## Claims

1. Use of the bacterium of *Pseudomonas sp.* Proradix (DSMZ 13134) for the treatment of plants and/or seeds against/in case of an affection by *Phytophthora sp.*

2. Use of claim 1, **characterized in that** the pathogen is *Phytophthora infestans.*

3. Use of any of the preceding claims, **characterized in that** the plants are the potato plant (*Solanum tuberosum*) and/or tubers thereof.

4. Use of any of claims 1 to 3, **characterized in that** the treatment is directed against leaf and tuber blight.

5. Use of any of claims 1 to 4, **characterized in that** the seed is the seed of the cucumber (*Cucumis sativus*).

6. Use of any of claims 1 to 5, **characterized in that** the treatment of the plants and/or the seeds is directed against the damping-off disease.

7. Method for the treatment of plants and/or seeds against/in case of an affection by *Phytophthora sp.,* comprising the following steps:
a) provision of plants and/or seeds,
b) incubation of the plants/seeds with a solution containing the bacterium of *Pseudomonas sp.* Proradix (DSMZ 13134).

8. Method of claim 7, **characterized in that** in step (b) the solution is applied through mordanting, spraying or immersing of the plants/seeds.

## Revendications

1. Utilisation de la bactérie *Pseudomonas sp.* Proradix (DSMZ 13134) pour le traitement de plantes et/ou de semences contre/dans le cas d'une infestation à *Phytophthora sp.*

2. Utilisation selon la revendication 1, **caractérisée en ce que** l'agent pathogène est *Phytophthora infestans.*

3. Utilisation selon l'une des revendications précédentes, **caractérisée en ce que** les plantes sont des plantes de pommes de terre (*Solanum tuberosum*) et/ou des tubercules.

4. Utilisation selon l'une des revendications 1 à 3, **caractérisée en ce que** le traitement s'effectue contre le mildiou.

5. Utilisation selon l'une des revendications 1 à 4, **caractérisée en ce que** la semence est une semence de concombre (*Cucumis sativus*).

6. Utilisation selon l'une des revendications 1 à 5, **caractérisée en ce que** le traitement des plantes et/ou semences s'effectue contre la maladie de la fonte des semis (« damping off »).

7. Procédé de traitement de plantes et/ou de semences contre/dans le cas d'une infestation à *Phytophthora sp.,* comprenant les étapes suivantes :
a) mise à disposition de plantes et/ou de semence,
b) incubation des plantes/semences avec une solution contenant la bactérie *Pseudomonas sp.* Proradix (DSMZ 13134).

8. Procédé selon la revendication 7, **caractérisé en ce que**, à l'étape (b), la solution est appliquée par imprégnation, pulvérisation ou traitement par immersion des plantes/semences.
